# EUROPÄISCHE PATENTANMELDUNG

(11) **EP 2 426 243 A1**
(43) Veröffentlichungstag der Anmeldung: **07.03.2012**
(21) Anmeldenummer: 10174942.2
(22) Anmeldetag: 01.09.2010
(51) Int. Cl.: D06C 19/00, B29C 55/18

(54) **Vorrichtung und Verfahren zur Behandlung (Weichmachung) von kontinuierlich geförfertem Gut**

(71) Anmelder: Benninger Zell GmbH, 79669 Zell i. W. (DE)
(72) Erfinder: Fricker, Paul, 5610 Wohlen (CH); Hiss, Andreas, 79669 Zell i..W (DE); Traut, Klaus Dieter, 79688 Hausen (DE)
(74) Vertreter: Hepp Wenger Ryffel AG

(57) **Zusammenfassung**

Eine Vorrichtung zur Behandlung einer kontinuierlich geförderten Fadenschar zum Herstellen von Reifencord weist zum lokalen Weichmachen der Fadenschar ein Walzenpaar auf, wobei jede Walze (3, 4) ist mit einer Verzahnung versehen ist. Beim Hindurchführen der Fadenschar zwischen den Walzen (3, 4) wird es durch die mechanische Beaufschlagung der Zähne deformiert wird. Die Walzen (3, 4) sind separat mit ansteuerbaren Elektromotoren direkt oder indirekt antreibbar sind, wodurch die Spaltabstände (A) und (B) genau gleich einstellbar sind. Der Achsabstand (C) der zwei Walzen (3, 4) ist je nach Gewebestärke und Gewebeart einstellbar.

## Beschreibung

Die Erfindung betrifft eine Vorrichtung und ein Verfahren zur Behandlung von kontinuierlich gefördertem Gut. Das Gut kann ein Flächengebilde, beispielsweise eine textile Warenbahn, sein. Besonders geeignet ist die erfindungsgemässe Vorrichtung zur Behandlung einer Fadenschar von Reifencord. Bei der Herstellung von Reifencord wird das mit einem Haftvermittler imprägnierte Gewebe durch einen Trockner geführt. Die Imprägnierung und die Wärmebehandlung führen insbesondere bei der Verwendung von Gewebe oder Fäden aus Polyester zu einer unerwünschten Materialversteifung. Es ist bekannt, das Gut zum Wiederherstellen der flexiblen Materialeigenschaften durch Umlenkungen zu deformieren und weichzumachen.

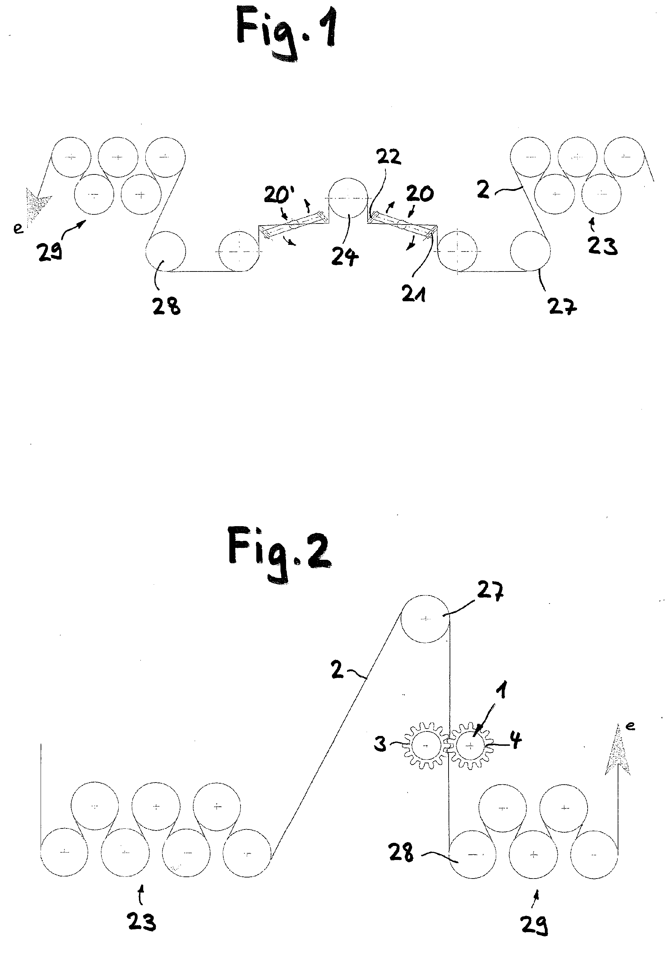

Bekannt sind Einheiten zum lokalen Verformen von Kunststofffasern oder -geweben zur Herstellung von Reifencord, bei denen das Gut an einer quer zur Gutrichtung verlaufenden Messerkante vorbei geführt und durch dieses Abstreifen lokal geknickt wird. Eine derartige Verform-Einheit ist beispielsweise durch den Anmelder (Benninger Zell GmbH) unter der Typenbezeichnung "Softener Paraflex" bekannt geworden und in nachfolgender Figur 1 gezeigt. Ein Nachteil dieser Vorrichtung besteht darin, dass die Messerkante das Gut und insbesondere den auf die Kunststofffäden aufgebrachten Imprägnierfilm beschädigen kann. In der Praxis hat sich sodann gezeigt, dass überschüssiges, durch die Messerkanten abgeschabtes Material aus der Imprägnierung nach Durchgang der Verform-Einheit an Anlageteilen haften bleiben kann und dann von nachfolgendem Gut (Fibrillen der Fäden) mitgerissen wird, was zu Unregelmässigkeiten der Imprägnierung auf den Fäden führt. Ein weiteres Problem ergibt sich aus dem Umstand, dass durch die Reibung die Knickelemente sich erwärmen und darum mit vergleichsweise grossem Aufwand abgekühlt werden müssen und dass durch die Reibung sich eine elektrostatische Ladung aufbaut.

Aus der GB 792 570 ist eine Vorrichtung bekannt geworden, in der einzelne Fäden oder Garne mit dem Ziel einer Zugspannungserhöhung durch ein Walzenpaar geführt werden. Die Walzen weisen Verzahnungen mit spitzen Zähnen auf. Durch die Beaufschlagung der Zähne wird der Faden deformiert und so mechanisch verstreckt. Eine der Zahnwellen kann über eine Magnetbremse gebremst werden, wodurch die andere, mit dieser in Wirkverbindung stehende Zahnwelle automatisch abgebremst wird. Versuche haben gezeigt, dass die Vorrichtung in speziellen Anwendungsgebieten wie etwa zum Weichmachen von Fadencord wenig geeignet ist. Die Anordnung hat unter anderem den Nachteil, dass der Deformationsvorgang schwierig kontrollierbar ist. Insbesondere können in Folge zu geringer Spaltbreiten zwischen den Zahnwalzen unerwünschte Spannungsspitzen und ein Quetschen des Fadens kaum verhindert werden. Beschädigungen der Imprägnierung oder sogar Faden- oder Fibrillenbrüche wären dann die Folge. Ein weiterer Nachteil besteht darin, dass auf den Fadenzug nur unzureichend eingewirkt werden kann. Weiterhin eignet sich die Anordnung nicht zur Behandlung einer Fadenschar, bei der die Fäden vorgängig mit einem Haftvermittler imprägniert wurden. Allenfalls überschüssiges Material auf den Fäden würde bei dieser Anordnung Störungen verursachen.

Es ist deshalb eine Aufgabe der vorliegenden Erfindung, die Nachteile des Bekannten zu vermeiden und insbesondere eine Vorrichtung und ein Verfahren zu schaffen, bei dem das Gut bei der Verformung schonend behandelt wird. Weiterhin sollen die Prozessbedingungen beim Verformen präzise kontrollierbar sein und das Endprodukt höhere Anforderungen insbesondere hinsichtlich Imprägnier-Qualität und Weichmachungsgrad erfüllen. Die Vorrichtung soll weiter energetisch effizient betreibbar sein und möglichst ohne Kühlung auskommen. Im Vergleich zu den konventionellen, mit Messerkanten arbeitenden Vorrichtungen soll der Abrieb auf den Fäden und damit der anfallende Abfall geringer sein. Ein solcher Abrieb wirkt sich ungünstig auf die Gummihaftungscharakteristiken des Reifencords aus. Schliesslich soll die Vorrichtung auch zum Einbau in bestehende Anlagen zur Herstellung von Reifencord geeignet sein (sog. "Retrofit").

Diese Aufgaben werden erfindungsgemäss mit einer Vorrichtung und ein Verfahren gelöst, die die Merkmale der unabhängigen Ansprüche aufweist.

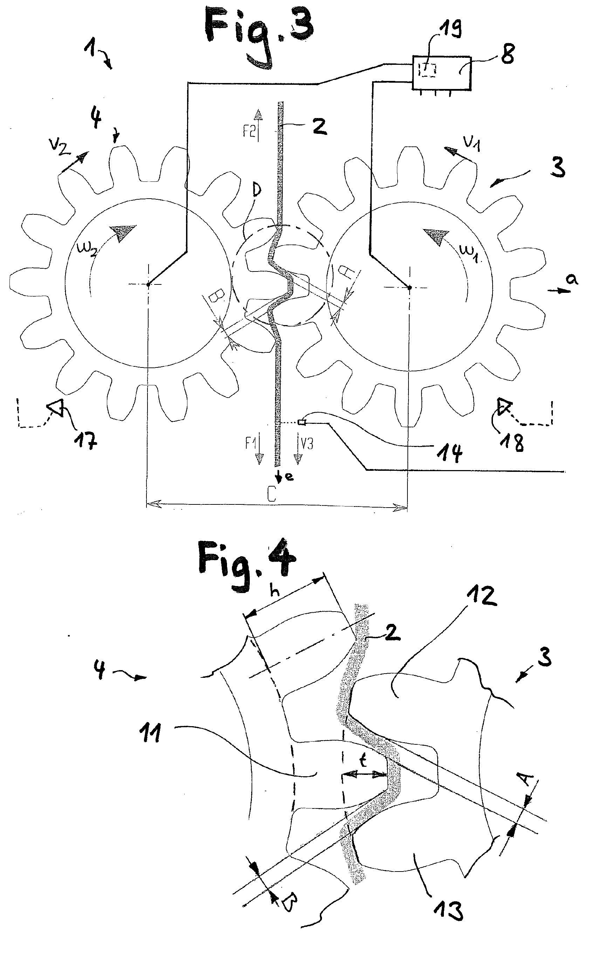

Die Vorrichtung weist eine oder mehrere Einheiten zum lokalen Verformen des Gutes auf. Die Verform-Einheit besteht aus einem Walzenpaar, wobei jede Walze im Bereich der Walzenmantelfläche mit einer Profilierung versehen ist. Die Profilierung kann vorzugsweise eine Verzahnung sein. Die Profilierung bzw. Verzahnung kann sich in axialer Richtung vorzugsweise über die gesamte Walzenbreite erstrecken. Beim Hindurchführen des Guts zwischen den Walzen wird durch die mechanische Beaufschlagung der Profilierung oder der Zähne das Gut in Transportrichtung verformt und damit flexibel oder weicher gemacht. Ein solches verzahntes Walzenpaar zeichnet sich gegenüber herkömmlichen Verform-Einheiten, die mit den vorgängig beschriebenen Messerkanten arbeiten, durch einen geringen Platzbedarf aus. Die Walzen sind separat antreibbar, wodurch die Parameter (insbesondere die Positionen der Walzen, Winkel- und Zahnflankenspiel A und B; vgl. Fig. 3,4) für das Verformen des Guts präzise kontrolliert werden können. Die Vorrichtung behandelt das Gut bei der Verformung auf schonende Weise, wodurch ein qualitativ hochwertiges Endprodukt erzeugbar ist. Ein im Hinblick auf die Produktqualität ungünstiges Quetschen des Guts kann mittels der erfindungsgemässen Vorrichtung verhindert oder wenigstens stark reduziert werden. Die Vorrichtung hat weiter Vorteile hinsichtlich energetischer Effizient, ein Kühlen ist dank der geringen Wärmeentwicklung beim Verformungsprozess nicht nötig.

Die Vorrichtung kann zwei, drei oder mehrere in Bezug auf die Transportrichtung nacheinander angeordnete Verform-Einheiten aufweisen. Die motorisch antreibbaren Walzenpaare mit den Verzahnungen haben den Vorteil, dass diese auch die Funktion von Förder- bzw. Transportmitteln erfüllen können. Vorteilhaft ist es dabei, wenn neben der Einheit mit dem wenigstens einen Walzenpaar zusätzlich wenigstens ein Zugwerk eingesetzt wird. Theoretisch wäre es aber auch vorstellbar, dass zusätzliche Walzen für ein Zugwerk zum Aufrechterhalten einer störungsfreien Förderung nicht erforderlich sind. Das letzte Walzenpaar einer Walzenpaar-Reihe könnte die Rolle eines Zugwerks übernehmen.

Vorteilhaft kann es sein, wenn wenigstens zwei Verform-Einheiten mit Walzenpaaren vorgesehen sind, wobei die wenigstens zwei Walzenpaare jeweils unterschiedliche Verzahnungen aufweisen. Es ist auch vorgesehen, zwei oder mehrere Geräte mit verschiedenem Zahnprofil nacheinander zu montieren. Beispielsweise kann die Vorrichtung einer Verformeinheit mit Walzen mit einer Grobverzahnung (z.B. 14 Zähne) und anschliessend eine Verform-Einheit mit feinerer Verzahnung (z.B. 40 Zähne) aufweisen, wodurch der Weicheffekt/Weichmachungsgrad je nach Gewebeart weiter verbessert werden kann.

Weiterhin kann es vorteilhaft sein, wenn die Vorrichtung wenigstens eine Verform-Einheit mit einem Walzenpaar und wenigstens eine Verform-Einheit mit einer quer zur Gutrichtung verlaufenden Messerkante, beispielsweise vom Typ "Softener Paraflex", aufweist. Das "Softener Paraflex"-Gerät hat den Vorteil, dass je nach Bedarf die Messerkanten in eine Betriebs- oder in eine inaktive Position verstellbar sind. Diese Variante stellt gewissermassen eine Universallösung dar und offeriert alle Optimierungsmöglichkeiten für alle Gewebearten. Eine solche Vorrichtung kann beispielhaft ein "Softener Paraflex"-Gerät, eine Verformeinheit mit Walzen mit 14 Zähnen und eine Verform-Einheit mit Verzahnung 40 Zähnen aufweisen (vorteilhaft in Bezug auf die Guttransportrichtung in dieser Reihenfolge).

Die Walzen sind derart ineinander greifend angeordnet sein, dass ein Spalt zwischen den Verzahnungen vorzugsweise angesteuert durch zwei separate Digitalantriebe gebildet wird. Eine direkte Berührung der jeweiligen Zähne der Walzen ergibt sich jedoch schon durch das Vorhandensein des Guts nicht, das zwischen den Walzen hindurchgeführt wird.

Ein weiterer Betriebsparameter stellt der Abstand zwischen den Rotationsachsen des Walzenpaars (Achsabstand C) dar. Durch Einstellen des Achsabstands kann je nach Faden- oder Gewebespezifikation der Biegungsgrad der Fäden beeinflusst werden.

Die Walzen eines Walzenpaars können achsparallel verlaufende Rotationsachsen aufweisen. Im Betrieb rotieren die Walzen synchron mit gleicher Drehzahl, jedoch mit gegenläufigen Drehsinn. Die Profilierung oder die Verzahnung kann sich in axialer Richtung entlang der Mantelfläche einer Walze erstrecken. Mit anderen Worten verläuft die Profilierung oder die Verzahnung quer und bevorzugt im rechten Winkel zur Transportrichtung des Guts. Durch den geringen Platzbedarf eignet sich die Vorrichtung auch zum Einbau in bestehende Anlagen. Insbesondere könnten konventionelle Systeme, die beispielsweise auf Messerkanten basieren, einfach und ohne grossen Aufwand ersetzt werden (Retrofit). Vorteilhaft kann es sein, wenn der Transportweg des Guts sowohl eingangsseitig als auch ausgangsseitig etwa senkrecht in Bezug auf die Ebene gebildet durch die beiden Rotationssachsen zum Walzenpaar verläuft. Ein Umlenken unmittelbar im Bereich der verzahnten Walzen ist in diesem Fall also nicht erwünscht. Das Gut kann beispielsweise mittels entsprechenden Führungs- und Umlenkmitteln vorzugsweise in Form von Walzen oder Rollen entlang eines vertikalen Transportweges an die Verform-Einheit heranund weggeführt werden. Für bestimmte Anwendungsgebiete wäre es aber auch denkbar, dass eingangsseitig und/oder ausgangsseitig das Gut auf dem Umfang einer der profilierten Wellen wenigsten abschnittsweise entlang geführt wird.

Jede Walze des Walzenpaars weist einen Drehantrieb auf. Ein derartiger Drehantrieb kann vorzugsweise ein Elektromotor, beispielsweise ein bürstenloser Gleichstrommotor oder ein ein-, zwei- oder dreiphasiger AC-Motor sein. Der Drehantrieb kann vorzugsweise einen Drehgeber oder Impulsgeber als Winkelmesssystem aufweisen. In steuer- und regeltechnischer Hinsicht kann es besonders vorteilhaft sein, wenn der Drehantrieb als Servoantrieb (z.B. ein AC-Servomotor), insbesondere als Digital-Servoantrieb, ausgebildet ist. Für einen Digital-Servoantrieb mit einem Drehgeber oder Impulsgeber als Winkelmesssystem wird nachfolgend auch der Begriff "Digitalantrieb" verwendet. Die Spalten (A, B) zwischen den Walzen können so genau eingestellt und kontrolliert werden. Zum Vermeiden des Quetschens der Fäden sollen die Spalten bzw. Abstände A und B durch entsprechende Steuerung oder Regelung genau eingehalten werden (Ziel A=B).

Die beiden Drehantriebe der Walzen sind mittels Steuermitteln separat ansteuerbar. Mit Hilfe von Steuermitteln können die Betriebsparameter, insbesondere die Spalten A und B sowie die Drehgeschwindigkeiten auf einfache Art und Weise optimiert und/oder variiert werden. Insbesondere kann mit dieser Anordnung die genaue Position der Walzen und damit die Spalten zwischen den Walzen ständig eingestellt werden. Ein unerwünschtes Quetschen des Guts kann so vermieden werden und die Weichmachung kann je nach Gewebestärke optimiert werden.

Für bestimmte Anwendungszwecke kann es vorteilhaft sein, wenn die Drehantriebe der Walzen derart angesteuert werden, dass die Drehgeschwindigkeit der Walzen höher als die Gutgeschwindigkeit ist, wodurch je nach Gewebeart der Weicheffekt optimiert werden kann. Die Gutgeschwindigkeit kann dabei über zwei Zugwerke einstellbar sein, wobei je ein Zugwerk in Bezug auf die VerformEinheit mit den Walzen vor- und nachgeschaltet ist.

Vorteilhaft kann es weiter sein, wenn der Drehantrieb jeweils direkt oder über ein vorzugsweise vorgespanntes Getriebe mit der Walze verbunden ist. Diese Anordnung ermöglicht es, dass die beiden Walzen synchron rotierend, jedoch mit entgegengesetztem Drehsinn, mit vergleichsweise geringem Regel- und/oder Steueraufwand angetrieben werden können.

Bevorzugt sind die Drehantriebe über vorzugsweise serielle Schnittstellen mit einer zentralen Steuereinrichtung verbunden.

Steuer- und regeltechnische Vorteile ergeben sich, wenn der Drehantrieb jeweils einen Elektromotor aufweist, wobei der Elektromotor über eine Digitalantriebseinrichtung ansteuerbar ist. Mit derartigen Digitalantrieben lässt sich ein winkelsynchroner Betrieb der Walzen eines Walzenpaars auf besonders einfache Art und Weise aufrechterhalten. Digitalantriebe eignen sich insbesondere bei der direkten Verbindung zwischen Drehantrieb und verzahnter Welle sowie beim Einsatz der vorgängig erwähnten verspannten Getriebe, bei dem ein Getriebespiel praktisch ausgeschlossen werden kann.

Die Steuermittel können elektronisch mit einem Drehgeber in Verbindung stehen, mit dem jeweils ein Signal für die Winkelgeschwindigkeit und momentane Position der Walzen erzeugbar ist.

Der Elektromotor weist vorzugsweise einen integrierten Drehgeber auf, mit dem pulsförmige Signale erzeugbar sind. Diese Signale können von einem Regler der Steuereinrichtung ausgewertet werden, woraus Drehgeschwindigkeit, Drehzahl und Drehwinkel der Motorwelle des Drehantriebs erhältlich sind.

Insbesondere bei Verwendung von Digitalantrieben in Kombination mit der direkten Wellen-Verbindung oder mit dem verspannten Getriebe kann erreicht werden, dass es eine iterative Erfassung der Drehgeschwindigkeit und -position und Regelung der Walzen nicht erforderlich ist. Auf die Drehgeschwindigkeit und - position der Walzen kann mit der Steuerung direkt eingegriffen werden. In der beschriebenen ersten Variante können die beiden Walzen über zwei Steuerkreise angesteuert werden.

Alternativ oder allenfalls sogar zusätzlich kann es jedoch auch vorteilhaft sein, wenn die Steuermittel einen Regler zum Regeln der Winkelgeschwindigkeiten und Positionen (Winkellagen) der Walzen aufweisen (zweite Variante). Die Regelung der Drehantriebe der Walzen hat den Vorteil, dass beispielsweise die variierende Beschaffenheit des Guts auf optimale Art und Weise ausgeglichen werden kann. Die Drehantriebe können jeweils einem separaten Regelkreis zugeordnet sein.

Die Überwachung des Betriebs kann optimiert werden, indem Sensoren zum Erfassen der Spaltbreiten zwischen den Verzahnungen eines Walzenpaars vorgesehen werden. Mit den Sensoren können die Spaltbreiten, die sich zwischen den jeweiligen Flankenabschnitten des verzahnten Walzenpaars ergeben, direkt oder indirekt gemessen werden. Bei der indirekten Messung können die jeweiligen Spaltbreiten anhand der Winkellagen der beiden Walzen unter Berücksichtigung der Walzen- und Verzahnungsgeometrie berechnet werden. Die Sensoren wirken elektronisch derart mit Steuermitteln zusammen, dass durch Ansteuern der Drehantriebe die Spaltbreiten aneinander angeglichen werden können.

Die Vorrichtung kann einen Sensor zum Erfassen der Geschwindigkeit des Guts umfassen, der in Bezug auf die Transportrichtung dem Walzenpaar vor- oder nachgelagert sein kann. Der Sensor kann dabei mit Steuermitteln zum Ansteuern der Walzen elektronisch verbunden sein. Der Geschwindigkeitssensor kann vorzugsweise ein berührungsloser optische Sensor, insbesondere ein Lasersensor sein. Mit der Vorrichtung kann je nach Bedarf eine Voreilung oder Nacheilung des Guts auf einfache Art und Weise eingestellt werden.

Die Vorrichtung kann eine Verstelleinrichtung aufweisen, mit der der Abstand zwischen den Rotationsachse der Walzen einstellbar ist.

Die Verstelleinrichtung kann hydraulische oder pneumatische Verschiebemittel zum Verkürzen oder Verlängern des Abstands aufweisen, der durch die Rotationsachsen der Walzen vorgegeben ist. Durch Verkürzen dieses Abstands lässt sich der Effekt der lokalen Verformung erhöhen. Die Verschiebemittel können beispielsweise durch eine pneumatischen oder hydraulischen Kolben-Zylinder-Einheit gebildet sein. Anstelle der erwähnten Verschiebemittel ist alternativ auch ein über beispielsweise einen Schrittmotor betreibbarer linearer Antrieb vorstellbar. Die Verwendung von pneumatische oder hydraulische Kolben-ZylinderEinheiten hat unter anderem den Vorteil, dass der Spalt zwischen den Verzahnungen bei Faden-Verdickungen oder Spleissstellen (Verbindungsstelle der Fadenschar) aufweitbar ist.

Eine Walze des Walzenpaars kann fest in Bezug auf deren Rotationsachse an einem ortsfesten Träger der Vorrichtung gelagert sein. Die andere Walze des Walzenpaars kann zum Verkürzen oder Verlängern des Abstands bewegbar am ortsfesten Träger angebracht sein. Selbstverständlich ist es theoretisch aber auch möglich, beide Walzen beweglich auszugestalten.

Die Verformung der Fadenschar lässt sich auf besonders einfache Art und Weise beeinflussen, indem die Verschiebeeinrichtungen oder -mittel zum Verändern des Umschlingungsgrads über Steuermittel ansteuerbar sind.

Die Walzen können die Form eines Stirnrads mit Geradverzahnung oder Schrägverzahnung aufweisen

Die Walzen können eine Evolventen- oder eine Zykloidenverzahnung aufweisen. Selbstverständlich sind jedoch auch andere Verzahnungsgeometrien denkbar. Beispielsweise kann die Verzahnung einen Radius auf dem Zahnkopf im Bereich des Kopfkreises und/oder im Bereich des Fusses aufweisen. Mögliche Ausführungen können zum Beispiel 14 oder 40 Zähne (d.h. z=14 oder 40) aufweisen. Selbstverständlich sind aber auch andere z-Zahlen vorstellbar. Je nach Gutart können in einer bestimmten Vorrichtung Walzen mit unterschiedlicher Zähnezahl, Modul und Zahnkopfform eingesetzt werden. Alternativ könnten die Walzen aber auch Profilierungen aufweisen.

Überraschenderweise hat sich gezeigt, dass eine Vorrichtung mit zwei oder mehreren nacheinander eingesetzten Walzenpaaren gute Weichmachungs-Ergebnisse liefert, bei welchen die Walzenpaare jeweils unterschiedliche Verzahnungen aufweisen. Beispielsweise kann die Verformeinheit ein erstes Walzenpaar mit z=14 und ein zweites Walzenpaar mit z=40 enthalten. Damit lässt sich die Universalität des Verfahrens für ein breites Spektrum von Gewebearten erweitern. Eine derartige Mehrwalzenpaar-Konfiguration könnte auch Vorteile für Vorrichtungen mit anderen Antriebslösungen vorteilhaft sein. Separate und ansteuerbare Antriebe wären in diesem Fall nicht zwingend vorzusehen.

Die Verzahnung der Walzen eines Walzenpaars kann wenigstens in einer Normalbetriebsphase derart ineinander greifend ausgestaltet sein, dass die Eindringtiefe t etwa 0.1 bis 0.6 der Zahnhöhe beträgt.

Überraschenderweise hat sich gezeigt, dass sich besonders gute Weichmachungsergebnisse erzielen lassen, wenn die Walzen im Bereich der Verzahnung verchromt oder gehärtet sind um Abrieb zu vermeiden.

Ein weiterer Aspekt der Erfindung betrifft ein Verfahren zur Behandlung von kontinuierlich gefördertem Gut, vorzugsweise unter Verwendung der vorgängig beschriebenen Vorrichtung. Das Gut wird zwischen zwei zusammenwirkenden Walzen geführt, wobei das Gut beim Hindurchführen durch die mechanische Beaufschlagung der Zähne deformiert wird. Die Drehantriebe der Walzen werden zum Aufrechterhalten eines hinsichtlich Winkelgeschwindigkeit und Walzenposition synchronen Betriebs über eine vorteilhaft zentrale Steuereinrichtung angesteuert.

Vorteilhaft kann es sein, wenn die Drehgeschwindigkeiten der profilierten oder verzahnten Walzen so gewählt wird, dass die Umfangsgeschwindigkeiten der Walzen im Bereich der Verzahnung grösser sind als die Gutgeschwindigkeit (Voreilung). In dieser Betriebsweise kann überschüssiges Material, das durch die Imprägnierung auf die Fäden aufgebracht wurde, besonders einfach wieder entfernt oder der Einfluss auf den Weichmachungsprozess vergrössert werden.

Zum Erwirken einer Voreilung oder einer Nacheilung kann eine relative Bewegung zwischen der Gutgeschwindigkeit und der Umlaufgeschwindigkeit der Walzen eingestellt werden.

Das Gut kann durch wenigstens zwei Verform-Einheiten mit Walzenpaaren geführt werden, wobei die wenigstens zwei Walzenpaare jeweils unterschiedliche Verzahnungen aufweisen. Die Drehantriebe der jeweiligen Walzenpaare können derart angesteuert werden, dass sich bei unterschiedlichen Walzenpaaren unterschiedliche Umlaufgeschwindigkeiten im Bereich der Verzahnungen ergeben. Die beiden Verformeinheiten können mit relativer Einzelbewegung (Voreilung) angesteuert werden. Jede Einheit kann somit eine eigene Voreilung aufweisen bzw. erzeugen. Somit lässt sich je nach Gewebeart der Weichmachungsgrad weiter anpassen.

Weitere Einzelmerkmale und Vorteile der Erfindung ergeben sich aus der nachfolgenden Beschreibung von Ausführungsbeispielen und aus den Zeichnungen. Es zeigen:
- Figur 1: eine schematische Darstellung einer Anlage mit Einheiten zum Verformen von Gut gemäss dem Stand der Technik,
- Figur 2: eine vereinfachte Darstellung einer Anlage mit einer erfindungsgemässen Einheit zum Verformen von Gut,
- Figur 3: eine vergrösserte Darstellung der Einheit aus Figur 2;
- Figur 4: eine stark vergrösserte Darstellung des Verformungsbereichs der Verform-Einheit (Detail D aus Fig. 1);
- Figur 5: eine Vorderansicht einer Vorrichtung mit einer Verform-Einheit;
- Figur 6: die Vorrichtung gemäss Fig. 5 im Querschnitt,
- Figur 7: die Vorrichtung gemäss einem weiteren Ausführungsbeispiel, und
- Figur 8: einen Querschnitt durch eine Walze der Vorrichtung gemäss Figur 7 in vergrösserter Darstellung.

In Figur 1 ist eine Anlage konventioneller Bauart gezeigt, die zwei Einheiten zum Verformen von Gut 2 aufweist. Die Anlage enthält zwei Zugwerke 23 und 29 sowie zwei Messwalzen 27 und 28. Die mit 20 bezeichnete Verform-Einheit weist zwei Elemente 21, 22 auf, die Messerkanten aufweisen, an denen das Gut 2 vorbei geführt und dabei geknickt wird. Die mit 20' bezeichnete zweite Verform-Einheit befindet sich ebenfalls in einer aktiven Stellung. Zum Erstellen einer inaktiven Stellung kann die VerformEinheit 20, 20' beispielsweise mit einer (nicht dargestellten) Hebelmechanik geschwenkt werden. Die Schwenkbewegung ist mit entsprechenden Pfeilen angedeutet. Die Messerkanten bewirken wegen der Reibung einen vergleichsweise starken Bremseffekt. Zwischen den beiden Einheiten befindet sich eine Umlenkwalze 24. Der prinzipielle Aufbau gemäss Figur 1 ist beispielsweise in den Maschinen "Softener Paraflex" der Anmelderin verwirklicht.

Figur 2 zeigt erfindungsgemäss eine Anlage, in der Gut 2 koninuierlich in e-Richtung transportiert und wobei es die nachfolgend näher erläuterte Einheit 1 mit gegenläufig rotierenden Walzen 3, 4 zum Verformen (Weichmachen) passiert. Die Anlage enthält vor und nach der Verform-Einheit je ein Zugwerk 23, 29. Mit den Messwalzen 27 und 28 können die Züge des Guts gemessen und eingestellt werden. Wie aus Figur 2 hervorgeht, lenken die erwähnten Messwalzen 27 und 28 das Gut derart um, dass es vertikal in etwa gerader Linie an die Verform-Einheit 2 heran- und weggeführt wird. Die Geschwindigkeit des Guts bzw. die Züge vor und nach der Einheit können mittels Digitalantrieben der Zugwerke kontrolliert und eingestellt werden.

In Figur 3 sind die zwei gegensinnig rotierenden, mit Verzahnungen versehenen Walzen 3 und 4 gezeigt. Zwischen den Walzen 3, 4 wird in e-Richtung gefördertes Gut 2 hindurchgeführt. Die Walzen 3 und 4 stehen dabei derart miteinander in Wirkverbindung, dass das dazwischen aufgenommene Gut 2 durch die mechanische Beaufschlagung der Verzahnungen deformiert und aus der Transportrichtung e verformt oder in Transportrichtung durch Umschlingung behandelt wird. Die mit 1 bezeichnete Verform-Einheit ist Bestandteil einer Vorrichtung zur Behandlung von Flächengebilden. Ein besonders bevorzugtes Anwendungsgebiet ist dabei die Herstellung von Reifencord. Eine entsprechende Vorrichtung weist ein Imprägnierabteil und ein nachgelagertes Trocknungsabteil auf. Die vorliegende Verform-Einheit kann in Bezug auf die Transportrichtung des Guts nachfolgend auf das (hier nicht dargestellte) Trocknungsabteil in der Vorrichtung eingebaut sein. Die vorliegende Verformeinheit eignet sich aufgrund ihrer kompakten Baugrösse auch zum Einbau in bereits bestehende Anlagen. Die beiden Walzen 3 und 4 sind hinsichtlich Dimensionierung und Verzahnung identisch ausgestaltet.

Figur 4 zeigt einen vergrösserten Ausschnitt auf den Zahnradeingriff des Zahnradpaars aus Figur 1. Wie aus Figur 3 sowie insbesondere aus der Detaildarstellung gemäss Figur 4 hervorgeht, greifen die einzelnen Zähne ersichtlicherweise - ähnlich einem Zahnradgetriebe - ineinander ein, jedoch ohne dass dieses Ineinandereingreifen zu einer Berührung zwischen den Zähne führt. Um eine Beschädigung des Guts 2 zu vermeiden, ist ein ausreichender Spaltabstand zwischen den Verzahnungen wenigstens in einer Normalbetriebsphase vorzusehen. In Figur 4 ist ein erster Spaltabstand zwischen den Zahnradflanken der Zähne 11 und 12 mit A und ein zweiter Spaltabstand zwischen den Flanken der Zähne 11 und 13 mit B bezeichnet. Mit t ist die Eindringtiefe des Zahns 11 in den gegenüberliegenden Fussbereich zwischen den benachbarten Zähnen 12 und 13 bezeichnet, h bezeichnet die Zahnhöhe.

Die Kopfkreislinie ist in Figur 4 mit einer strichlierten Linie angedeutet. Der Zahn 11 befindet sich in der Stellung gemäss Figur 2 genau mittig zwischen den Zähnen 12 und 13. In dieser Position ergibt sich die maximale Eindringtiefe t der Zähne. Die Walzen 3, 4 weisen eine Evolventenverzahnung auf.

Weiterhin kann es vorteilhaft sein, wenn wenigstens eine der Walzen derart beweglich angeordnet ist, dass plötzlich auftretende Unebenheiten oder Verdickungen im Gut kompensiert werden können, ohne dass es zu einem Bruch oder einer Beschädigung des Guts kommt. Die entsprechende Verschieberichtung ist in Figur 3 mit dem Pfeil a angedeutet.

Für einen optimalen Betrieb müssen die Walzen 3 und 4 synchron rotieren und die Spalten A,B kontrolliert werden, wobei die Spaltbreiten bevorzugt gleich sind. Hierzu sind die jeweiligen Drehantriebe zum Antreiben der einzelnen Walzen 3, 4 mit einer digitalen Steuereinrichtung 8 elektronisch verbunden. Die Steuereinrichtung 8 gibt Steuersignale an die Drehantriebe ab, so dass die Walzen mit gleicher Winkelgeschwindigkeit rotieren (ω1 = ω2) und die jeweiligen Positionen der Walzen gleich bleiben (Bedingung A = B). Die Geschwindigkeiten v1, v2 im Umfangsbereich der Verzahnung sind folglich ebenfalls gleich. Mit F1 und F2 sind Zugkräfte auf das Gut angedeutet, die in e-Richtung oder in die Gegenrichtung wirken. Mit einem Sensor 14 kann die Geschwindigkeit v3 des Guts gemessen werden. Die beispielsweise als AC-Servomotoren ausgestalteten Drehantriebe 5, 6 werden durch Drehgeber, insbesondere Digitalgeber mit sehr hoher Winkelauflösung kontrolliert. Um das Getriebespiel im Regelsystem zu vermeiden, werden die Digitalgeber bevorzugt direkt auf den Walzen befestigt.

Alternativ oder zusätzlich zur Ansteuerung über die Drehgeber der Drehantriebe für die Walzen kann auch eine Regelung vorgesehen werden. Mit 17 und 18 sind Sensoren angedeutet, mit deren Hilfe die Winkelgeschwindigkeit und die Winkellage der Walzen messbar ist. Diese Sensoren 17, 18 können über Signalleitungen mit der Steuereinrichtung 8 verbunden sein und zusammen mit den Drehgebern jeweils einen oder einen gemeinsamen Regelkreis bilden. In der Steuereinrichtung kann für die Regelung eine Vergleichseinrichtung integriert sein, die in an sich bekannter Art und Weise die gemessenen Ist-Werte für die Geschwindigkeiten oder Drehzahlen mit Sollwerten vergleicht und die Steuereinrichtung 8 anhand des Vergleichs zum Regeln korrigierend auf die Drehantriebe einwirkt. In analoger Weise müssen die Positionen bzw. Winkellagen der Walzen erfasst, miteinander verglichen und korrigiert bzw. geregelt werden. Die Drehantriebe und gegebenenfalls der Gut-Sensor 14 sowie weiter allenfalls die Sensoren 17 und 18 zum Erfassen der Winkelgeschwindigkeit und/oder Drehgeschwindigkeiten am Walzenumfang und der Winkellage der Walzen können über ein Bus-System miteinander vernetzt sein. Über einen Regelkreis können allfällig unterschiedliche Drehgeschwindigkeiten der Walzen 3 und 4 korrigiert werden.

In vielen Fällen ist es vorteilhaft, wenn die Transportgeschwindigkeit des Guts und die Umlaufgeschwindigkeit der Walzen gleich sind. Wenn aber die verzahnten Walzen 3 und 4 mit einer höheren Geschwindigkeit als der Fördergeschwindigkeit laufen (d.h. v1, v2 > v3), kann der Fadenzug vergrössert werden und der Weichmacheffekt verstärkt werden. Insbesondere im Anwendungsgebiet der Reifencord-Herstellung kann überschüssiges Imprägniermaterial auf den Polyesterfäden auf besonders einfache Art und Weise entfernt werden oder die Fadenschar noch weicher machen. In bestimmten Anwendungsgebieten oder -fällen kann es jedoch auch vorteilhaft sein, wenn die Walzen langsamer als das Gut laufen.

Durch Bewegen beispielsweise der Walze 3 in Pfeilrichtung a lässt sich der Paarwalzen-Abstand C bei einen drehsynchronen Betrieb die Spaltbreiten A,B gleichsinnig vergrössern (oder verkleinern) und so an unterschiedliches Gut anpassen. Durch Variieren der Spaltbreiten lässt sich weiterhin der Umschlingungsgrad des durch die Zähne beaufschlagten Guts einstellen und damit die Stärke des Weichmachungs-Effekts beeinflussen.

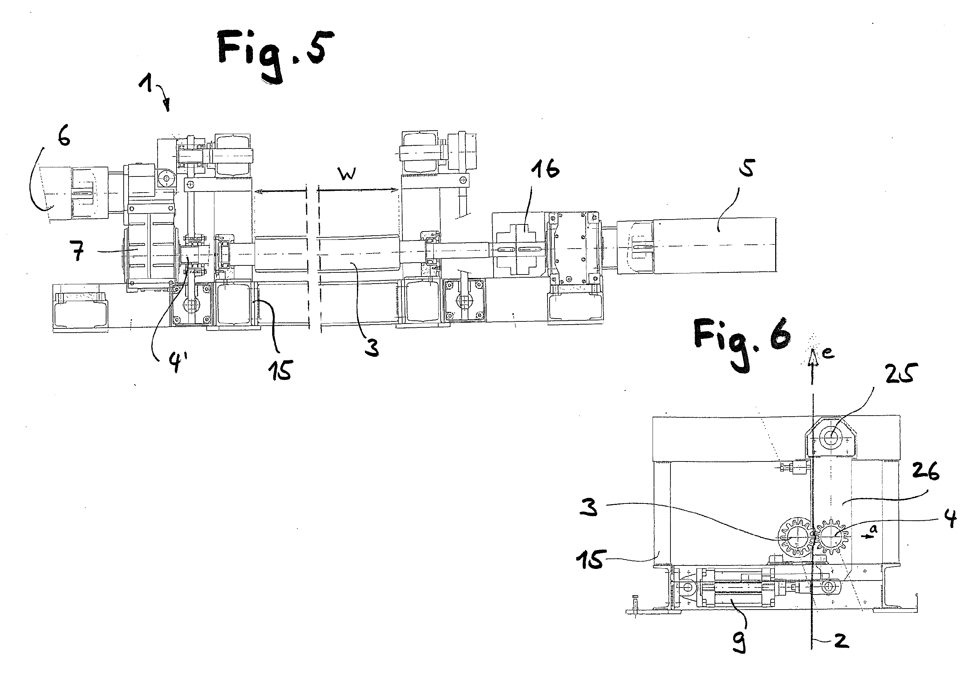

Die Figuren 5 und 6 zeigen konstruktive Details einer erfindungsgemässen Verform-Einheit 1. Wie aus Figur 3 hervor geht, erstreckt sich die Verzahnung der Walze 3 über die gesamte Walzenbreite W, die die maximale Warenbreite des geförderten Guts festlegt. In Figur 5 sind weiterhin Elektromotoren 5, 6 als Drehantriebe für die Walzen erkennbar. Der mit 5 bezeichnete AC-Elektromotor mit digitalem Dreh- oder Impulsgeber ist koaxial zur Walze 3 angeordnet und direkt mit dieser verbunden. Die direkte Verbindung erfolgt über eine starre Kupplung 16. Von der zweiten Walze ist in Figur 5 lediglich ein stirnseitiges Anschlussstück erkennbar, das mit 4' bezeichnet ist. Das Anschlussstück 4' der Walze ist an ein Getriebe 7 gekoppelt, das getriebemässig die Verbindung zum Elektromotor 6 herstellt. In steuer- und regeltechnischer Hinsicht kann es besonders vorteilhaft sein, wenn der Drehantrieb als Servomotor ausgebildet ist. Die Elektromotoren können beispielsweise bürstenlose Gleichstrommotoren sein. Die gemessenen Dreh- oder Winkelgeschwindigkeiten (v1 bzw. ω1, v2 bzw. ω2) und Positionen können in einem geschlossenen oder allenfalls offenen Regelkreis von der Steuereinrichtung geregelt werden, die den gemessenen Istwert der Geschwindigkeit und Winkellage mit einem Geschwindigkeits-Sollwert bzw. Winkellage-Sollwert vergleicht und mittels einer Vergleichseinheit der Steuereinrichtung eine Korrekturgrösse zum Regeln an die Drehgeber abgibt. Die Walzen 3, 4 weisen die Form eines Stirnrads mit Geradverzahnung auf.

Figur 6 zeigt, dass das Gut entlang eines vertikalen Transportweges an die Verform-Einheit 1 in der Seitenansicht gerade heran- und schliesslich weggeführt wird. Die Transportrichtung e verläuft nach oben. Selbstverständlich kommen aber auch andere Orientierungen oder Richtungen in Frage. In Figur 6 ist eine pneumatische Kolben-Zylinder-Einheit 9 gezeigt, mit der die Walze in a-Richtung hin und her bewegbar ist. Die pneumatische Kolben-Zylinder-Einheit 9 ist gelenkig mit einem Stutzelement 26 verbunden, an dem die Walze 4 drehbar gelagert ist. Das Stützelement ist am oberen Ende über einen Drehpunkt mit dem ortsfesten Träger 15 verbunden. Durch den verhältnismässig grossen Hebel ist eine vorteilhafte Verschiebung der Walze 4 in a-Richtung sichergestellt. Die Walzen weisen jeweils 14 Zähne auf und können beispielhaft einen Kopfkreisdurchmesser von 128 mm und einen Fusskreisdurchmesser von ca. 93 mm aufweisen.

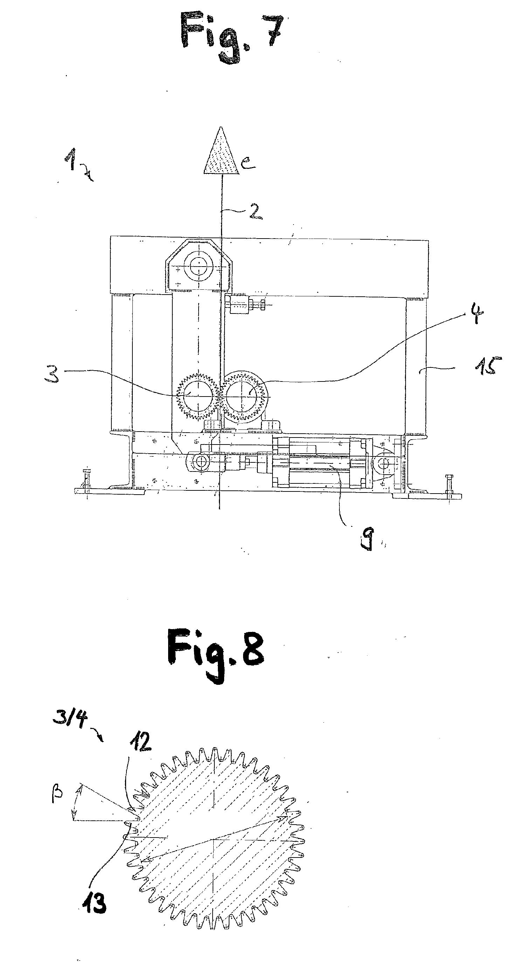

Figur 7 zeigt eine weitere Variante einer erfindungsgemässen Verform- bzw. Weichmacheinheit 1. Diese Verform- bzw. Weichmacheinheit unterscheidet sich von derjenigen gemäss dem vorherigen Ausführungsbeispiel im Wesentlichen lediglich dadurch, dass Walzen mit einer anderen Verzahnung eingesetzt sind. Die Walzen 3 und 4 sind in diesem Ausführungsbeispiel mit jeweils 40 Zähnen versehen. Konstruktive Details zur Verzahnung sind aus nachfolgender Figur 8 entnehmbar, die einen massstabsgetreuen Querschnitt der Walzen 30 und 40 zeigt.

Wie aus Figur 8 hervorgeht, weisen die einzelnen Zähne 12,13 etwa gerade verlaufende Flankenlinien. Die Zahnköpfe und Zahnfüsse zwischen den jeweiligen Zahnflanken sind etwa kreisrund gestaltet (Radius z.B. zwischen 1 und 3mm). Mit β ist ein Flankenwinkel zwischen den benachbarten Zähnen 12 und 13 bezeichnet, der im vorliegenden Ausführungsbeispiel 29° beträgt.

## Patentansprüche

1. Vorrichtung zur Behandlung von kontinuierlich geförderten Gut (2), insbesondere von Flächengebilden wie einer Fadenschar von Reifencord, mit wenigstens einer Einheit zum Verformen des Guts, enthaltend ein Walzenpaar, wobei jede Walze (3, 4) eines Walzenpaars jeweils mit einer Profilierung und insbesondere einer Verzahnung versehen ist, die derart miteinander in Wirkverbindung stehen, dass beim Hindurchführen von Gut zwischen den Walzen (3, 4) das Gut (2) durch die mechanische Beaufschlagung der Profilierung und insbesondere der Zähne (11, 12, 13) deformiert wird, **dadurch gekennzeichnet dass** die Walzen (3, 4) separat antreibbar sind, wobei jeder Walze (3, 4) ein Drehantrieb (5, 6) zugeordnet ist und wobei die Drehantriebe (5, 6) der Walzen (3, 4) mittels Steuermitteln separat ansteuerbar sind.

2. Vorrichtung nach Anspruch 1, **dadurch gekennzeichnet, dass** der Drehantrieb (5, 6) jeweils direkt oder über ein vorzugsweise vorgespanntes Getriebe (7) mit der Walze (3, 4) verbunden ist.

3. Vorrichtung nach Anspruch 2, **dadurch gekennzeichnet, dass** die Drehantriebe (5, 6) über vorzugsweise serielle Schnittstellen mit einer zentralen Steuereinrichtung (8) in Verbindung stehen.

4. Vorrichtung nach einem der Ansprüche 1 bis 3, **dadurch gekennzeichnet, dass** der Drehantrieb (5, 6) jeweils einen Elektromotor aufweist, wobei der Elektromotor über eine Digitalantriebseinrichtung ansteuerbar ist.

5. Vorrichtung nach einem der Ansprüche 1 bis 4, **dadurch gekennzeichnet, dass** Walzen mit einem Drehgeber versehen sind und dass die Steuermittel elektronisch mit den Drehgebern in Verbindung stehen.

6. Vorrichtung nach einem der Ansprüche 1 bis 5, **dadurch gekennzeichnet, dass** die Steuermittel einen Regler zum Regeln der Winkelposition und/oder Winkelgeschwindigkeit (ω1, ω2) der Walzen (3, 4) aufweisen.

7. Vorrichtung nach Anspruch 6, **dadurch gekennzeichnet, dass** die Drehantriebe (5, 6) jeweils einem separaten Regelkreis zugeordnet sind.

8. Vorrichtung nach einem der Ansprüche 1 bis 7, **dadurch gekennzeichnet, dass** Sensoren zum Erfassen der Spaltbreiten (A, B), die sich zwischen den jeweiligen Flankenabschnitten des verzahnten Walzenpaars ergeben, vorgesehen sind, die elektronisch mit den Steuermitteln in Wirkverbindung stehen, über die die Spaltbreiten (A, B) durch separates Ansteuern der Drehantriebe einander angeglichen werden können.

9. Vorrichtung nach einem der Ansprüche 1 bis 8, **dadurch gekennzeichnet, dass** dem Walzenpaar ein Sensor (14) zum Erfassen der Geschwindigkeit (ω) des Guts vor- oder nachgelagert ist, wobei der Sensor (14) mit den Steuermitteln zum Ansteuern der Walzen (3, 4) elektronisch verbunden ist.

10. Vorrichtung nach einem der Ansprüche 1 bis 9, **dadurch gekennzeichnet, dass** sie hydraulische oder pneumatische Verschiebemittel (9) zum Verkürzen oder Verlängern des Abstands (A) der Rotationsachsen der Walzen (3, 4) aufweist ist.

11. Vorrichtung nach einem der Ansprüche 1 bis 10, **dadurch gekennzeichnet, dass** eine Walze (3) des Walzenpaars fest in Bezug auf deren Rotationsachse an einem ortsfesten Träger (15) gelagert ist und dass die andere Walze (4) des Walzenpaars zum Verstellen der Position und/oder zum Verkürzen oder Verlängern des Abstands (A) bewegbar am ortsfesten Träger angebracht ist.

12. Vorrichtung nach einem der Ansprüche 1 bis 11, **dadurch gekennzeichnet, dass** die Verschiebeeinrichtungen (9) zum Verändern des Umschlingungsgrads über Steuermittel ansteuerbar sind.

13. Vorrichtung nach einem der Ansprüche 1 bis 12, **dadurch gekennzeichnet, dass** die Walzen (3, 4) die Form eines Stirnrads mit Geradverzahnung oder Schrägverzahnung aufweisen.

14. Vorrichtung nach einem der Ansprüche 1 bis 13, **dadurch gekennzeichnet, dass** die Walzen (3, 4) eine Evolventen- oder eine Zykloidenverzahnung aufweisen.

15. Vorrichtung nach einem der Ansprüche 1 bis 14, **dadurch gekennzeichnet, dass** die Verzahnungen der Walzen (3, 4) eines Walzenpaars wenigstens in einer Normalbetriebsphase derart ineinander greifend ausgestaltet sind, dass die Eindringtiefe (t) etwa 0.1 bis 0.6 der Zahnhöhe (h) beträgt.

16. Vorrichtung nach einem der Ansprüche 1 bis 15, **dadurch gekennzeichnet, dass** die Walzen (3, 4) im Bereich der Verzahnung verchromt oder gehärtet sind.

17. Vorrichtung nach einem der Ansprüche 1 bis 16, **dadurch gekennzeichnet, dass** wenigstens zwei Verform-Einheiten mit Walzenpaaren vorgesehen sind, wobei die wenigstens zwei Walzenpaare jeweils unterschiedliche Verzahnungen aufweisen.

18. Vorrichtung nach einem der Ansprüche 1 bis 17, **dadurch gekennzeichnet, dass** die Vorrichtung wenigstens eine VerformEinheiten mit einem Walzenpaar (3,4) und wenigstens eine Verform-Einheiten mit einer quer zur Gutrichtung verlaufenden Messerkante aufweist.

19. Verfahren zur Behandlung von kontinuierlich geförderten Gut (2) und insbesondere zur Behandlung von Flächengebilden wie einer Fadenschar von Reifencord, insbesondere unter Verwendung einer Vorrichtung nach einem der Ansprüche 1 bis 18 mit folgenden Verfahrenschritten:
- Durchführen von Gut zwischen zwei miteinander in Wirkverbindungen stehenden Walzen (3, 4), die jeweils eine Verzahnung aufweisen, wobei das Gut beim Hindurchführen durch die mechanische Beaufschlagung der Zähne (11, 12, 13) deformiert wird, und
- Ansteuern der Drehantriebe (5, 6) der Walzen (3, 4) zum Aufrechterhalten eines hinsichtlich Winkelgeschwindigkeit und Walzenposition synchronen Betriebs.

20. Verfahren nach Anspruch 19, **dadurch gekennzeichnet, dass** zum Erwirken einer Voreilung oder einer Nacheilung eine relative Bewegung zwischen der Gutgeschwindigkeit und der Umlaufgeschwindigkeit der Walzen (3,4) eingestellt wird.

21. Verfahren nach Anspruch 19 oder 20, **dadurch gekennzeichnet, dass** das Gut durch wenigstens zwei Verform-Einheiten mit Walzenpaaren geführt wird, wobei die wenigstens zwei Walzenpaare jeweils unterschiedliche Verzahnungen aufweisen und dass Drehantriebe der jeweiligen Walzenpaare derart angesteuert werden, dass sich unterschiedliche Umlaufgeschwindigkeiten im Bereich der Verzahnungen ergeben.
